# EUROPÄISCHE PATENTANMELDUNG

(11) **EP 0 890 415 A2**
(43) Veröffentlichungstag der Anmeldung: **13.01.1999**
(21) Anmeldenummer: 98112467.0
(22) Anmeldetag: 03.07.1998
(51) Int. Cl.: B24B 27/033, B24B 21/00, B24B 45/00, B23Q 3/157

(54) **Vorrichtung zur Flächenbearbeitung von gegossenem oder gewalzten Material wie Brammen oder Bändern**

(30) Priorität: 11.07.1997 DE 19729674
(71) Anmelder: SMS SCHLOEMANN-SIEMAG AKTIENGESELLSCHAFT, 40237 Düsseldorf (DE)
(72) Erfinder: Kneppe, Günter, Dr., 57271 Hilchenbach (DE); Haberkamm, Klaus-Dieter, Dipl.-Ing., 57074 Siegen (DE)
(74) Vertreter: Valentin, Ekkehard

(57) **Zusammenfassung**

Eine Vorrichtung zur Flächenbearbeitung von gegossenem oder gewalztem Material, wie Brammen oder Bändern. Die Bearbeitung findet während der Transportbewegung mittels umlaufender Schleifbänder oder Fräsern statt. Diese sind mit einem Träger verbunden. Der Träger ist in einem Traggerüst (1) angeordnet, das seitlich der Transportbahn der Brammen oder Bändern ortsfest oder parallel zu dieser verfahrbar ist. Der Träger ist dabei als lösbar mit dem Traggerüst (1) verbindbare Auswechselkassette (9) und anstellverschiebbar in diesem angeordnet.

## Beschreibung

Die Erfindung bezieht sich auf eine Vorrichtung zur Flächenbearbeitung von gegossenem oder gewalzten Material, wie Brammen oder Bändern während deren Transportbewegung mittels umlaufender Schleifbänder oder Fräsern, die mit einem Träger verbunden sind, der in einem seitlich der Transportbahn des Materials ortsfest oder parallel zu diesem verfahrbaren Traggerüst anstellverschiebbar angeordnet ist.

Es ist bekannt, die Oberflächen von, insb. aus Strangguß-, Walz- oder Wärmeeinrichtungen kommende Brammen oder Bänder aus Stahl, Aluminium oder anderen Werkstoffen vor deren Weiterverarbeitung in noch heißem Zustand mit Schleifeinrichtungen zu bearbeiten, um die, bei der Vorformung entstandenen Oberflächenfehler wie Zunderbildungen, Oxidschichten u. dergl. zu beseitigen (US-A 689512). Man hat dazu schon vorgeschlagen, die Oberfläche mit Schleifwalzen oder Fräsern (DE-A1-3600144 und DE-GM 7 111 212) oder mit umlaufenden Schleifbändern zu bearbeiten.

Die inzwischen bei der Verwendung von Schleifbändern erzielten guten Bearbeitungsergebnisse werden durch die geringe Standzeit, die der Belag solcher Bänder aufweist, beeinträchtigt, obgleich inzwischen sowohl bei der Entwicklung besonderer Belagmaterialien als auch bei der Konstruktion feinfühliger Mechanismen für den Andruck des Bandes auf die Bearbeitungsoberfläche und der Steuerung dieser Mechanismen Fortschritte erzielt wurden (DE-T2 689 14 845).

Der Erfindung liegt die Aufgabe zugrunde, die Bearbeitungsleistung bekannter Schleifeinrichtungen gattungsgemäßer Ausbildung trotz verhältnismäßig geringer Standzeiten der Schleifmittel zu erhöhen.

Diese Aufgabe wird dadurch gelöst, daß der Träger der Schleifbänder bzw. der Fräser als lösbar mit dem Traggerüst verbindbare Auswechselkassette ausgebildet ist, dabei kann, wie die Erfindung vorsieht ein in dem Traggerüst angeordnetes Antriebsaggregat mit dem in der Auswechselkassette angeordneten Schleifband bzw. dem Fräser über lösbare Kupplungen verbindbar sein. Das Traggerüst kann erfindungsgemäß aus einem vorzugsweise ständerförmigen Gerüstrahmen und einem Elemente der Kupplung und ggfs. Antriebsübertragungsgetriebe aufnehmenden mit dem Traggerüst heb-, senk- und ggfs. verschiebbar verbundenen Zwischenträger bestehen. Das Traggerüst kann auch nach einem weiteren Vorschlag der Erfindung die Form eines Portalrahmens aufweisen und der Zwischenträger ausbalanciert in diesem hängend, anstellbar, vertikal geführt und horizontal verschieb- und festlegbar sein. Für die Bearbeitung von Flächen, die breiter sind als die Arbeitsbreite der Schleifbänder oder der Fräser können entweder mehrere, versetzt zueinander und in Richtung der Transportbahn des zu bearbeitenden Materials hintereinander angeordnete Traggerüste, oder bei Verwendung eines Trägers in der Form eines Portalrahmens mehrere, in diesem nebeneinander hängend angeordnete Zwischenträger verwendet werden.

Weitere Merkmale der Erfindung sind in Unteransprüchen niedergelegt.

Bei Anwendung der vorstehend erläuterten Ausbildungsmerkmale der Erfindung lassen sich nicht nur die Auswechselkassetten mit den abgenutzten Schleifbändern oder Fräsern, wie in solchen mit frischen Schleifbändern oder Fräsern ausgestattete, schnell austauschen und damit längere Betriebsunterbrechungen vermeiden; es besteht darüberhinaus auch die Möglichkeit bei Verwendung mehrerer nebeneinander hängender oder versetzt hintereinander angeordneter Zwischenträger mit dem von diesen jeweils getragenen Auswechselkassetten auch breite Flächen in einem Gang zu bearbeiten.

Die Erfindung wird anhand der in der Zeichnung dargelegten Ausführungsbeispiele näher erläutert. In der Zeichnung zeigen
- Fig. 1: ein Ausbildungsbeispiel der Vorrichtung im Schnitt in schematischer Darstellung,
- Fig. 2: eine Einzelheit der Ausbildung nach Fig. 1,
- Fig. 3 und 4: Flächenbearbeitungsbeispiele unterschiedlicher Form.

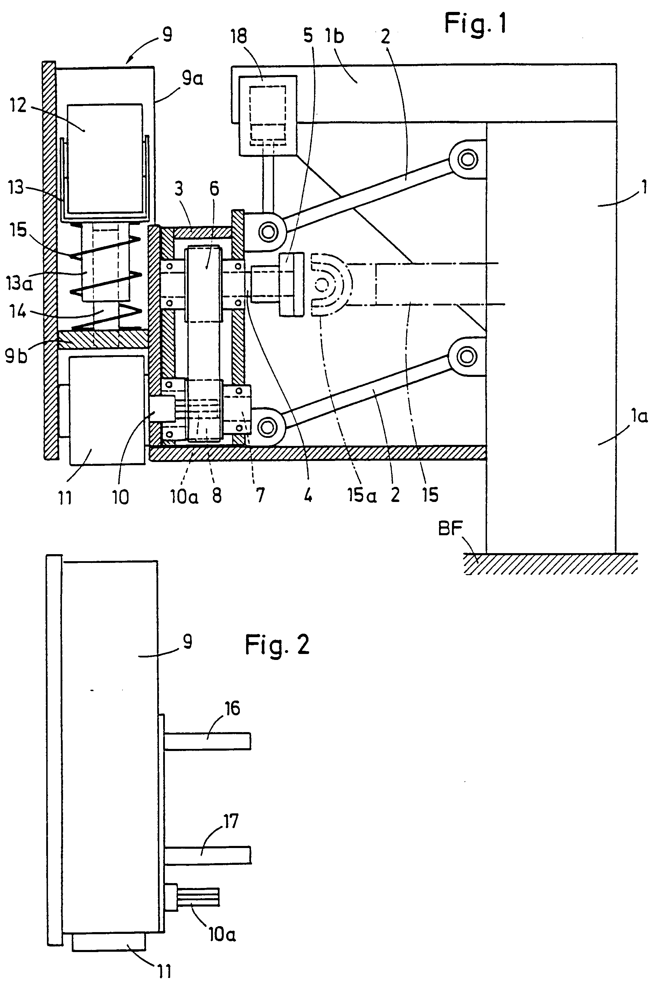

Wie aus Fig. 1 zu ersehen, ist ein Traggerüst 1 mit seinem Standfuß 1 a ortsfest auf dem Bodenflur BF angeordnet. Auf den Standfuß 1 a ist ein Kragarm 1 b aufgesetzt. An den Standfuß 1 a sind, hier vertikal übereinander, Parallelogramm-Schwenkarme 2 angelenkt, und mit deren freien Enden ist, ebenfalls angelenkt, ein Zwischenträger 3 verbunden. In diesen ist eine Welle 4 gelagert, die außenseitig, dem Standfuß 1 a zugewandt, ein Kuppelelement trägt und innerhalb des, hier kastenförmigen Zwischenträgers 3, einen Zahnriementrieb 6, der zu einer weiteren Welle 7 führt, auf der eine Steckhülse 8 sitzt. In diese Steckhülse 8 ist von außen her ein aus der Auswechselkassette 9 herausragender Kuppelbolzen 10 a einsteckbar, der auf einer in der Auswechselkassette 9 lagernden Welle 10 sitzt. Diese Welle 10 trägt die Antriebstrommel 11 für das hier nicht dargestellte Schleifband, das um diese Antriebstrommel und eine darüber angeordnete Standtrommel 12 läuft. Die Standtrommel 12 lagert in einer Lagergabel 13, die mit einem Rohransatz 13 a auf einem, fest mit der Wandung 9 a der Auswechselkassette 9 verbundenen Führungsstab gegen die Wirkung der Stützfeder 15 verschiebbar ist, die sich gegen ein den Führungsstab 14 tragendes Keilelement 9 b der Wandung 9 a der Auswechselkassette 9 abstützt.

Am Traggestell 1 ist der nicht dargestellte Antriebsmotor für das Schleifband angeordnet, dieser ist über die strichpunktiert angedeutete als Gelenkwelle ausgebildete Antriebswelle 15 und das, auf deren Ende sitzende Kupplungselement 15 a mit dem auf der Welle 4 sitzenden Kupplungselement 5 verbunden und überträgt den Antrieb über den Zahntrieb 6, die Steckhülse 8, die Welle 10 auf die Antriebstrommel 11 für das Schleifband.

Wie aus Fig. 2 hervorgeht, weist die Auswechselkassette 9 außenseitig, dem Zwischenträger 3 zugewandt, noch Zentrier- und Befestigungsbolzen 16 und 17 auf, die in hier nicht dargestellte Aufnahmeausnehmungen im Zwischenträger 3 einsteck- und dort und festlegbar sind. Die Auswechselkassette kann mit Hilfe dieser Bolzen seitlich aus dem Zwischenträger 3 herausgezogen und an ihrer Stelle eine andere Auswechselkassette eingesetzt werden.

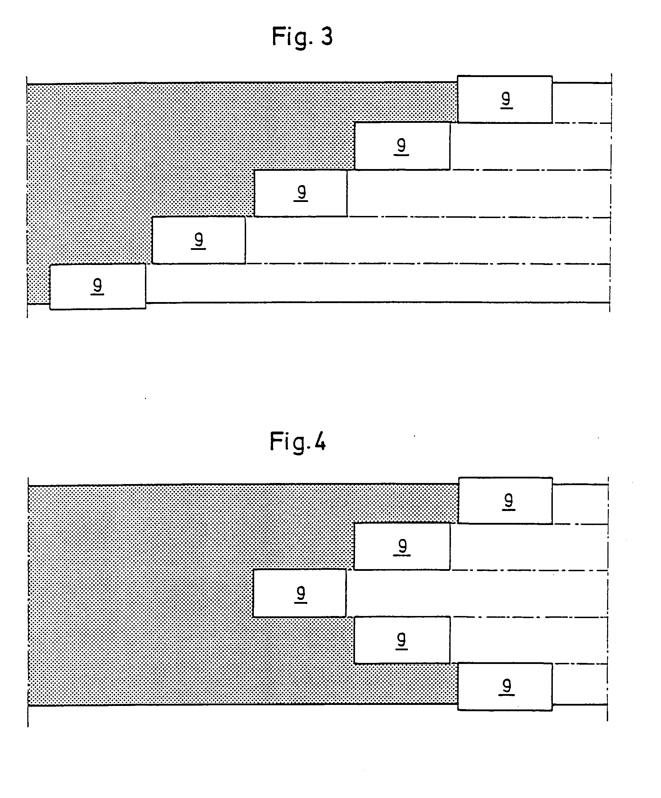

Aus den Fig. 3 und 4 gehen die Anordnungsmöglichkeiten von versetzt hintereinander bzw. versetzt einander gegenüberliegend angeordneter Bandschleifeinrichtungen in den Auswechselkassetten 9 hervor.

### Bezugszeichenübersicht

- 1: Traggestell
- 1b: Kragarm
- 1a: Standfuß
- 2: Parallelschwenkarm
- 3: Zwischenträger
- 4: Welle
- 5: Kupplungselement
- 6: Zahntrieb
- 7: Welle
- 8: Steckhülse
- 9: Auswechselkassette
- 9a: Wandung (der Auswechselkassette)
- 9b: Teilelement (der Wandung der Auswechselkassette)
- 10: Welle
- 10a: Kuppelbolzen
- 11: Antriebstrommel
- 12: Spanntrommel
- 13: Lagergabel
- 13a: Rohransatz
- 14: Führungsstab
- 15: Antriebswelle
- 15a: Kuppelelement
- 16: Zentrier- und Befestigungsbolzen
- 17: Zentrier- und Befestigungsbolzen
- 18: Kolben-Zylinder-Aggregat

## Patentansprüche

1. Vorrichtung zur Flächenbearbeitung von gegossenem oder gewalzten Material, wie Brammen oder Bändern während deren Transportbewegung mittels umlaufender Schleifbänder oder Fräsern, die mit einem Träger verbunden sind, der in einem seitlich der Transportbahn des Materials ortsfest oder parallel zu dieser verfahrbaren Traggerüst anstellverschiebbar angeordnet ist,
**dadurch gekennzeichnet,**
daß der Träger als lösbar mit dem Traggerüst (1) verbindbare Auswechselkassette (9) ausgebildet ist.

2. Vorrichtung nach Anspruch 1,
**gekennzeichnet durch**
ein in dem Traggerüst (1) angeordnetes Antriebsaggregat, das mit dem in der Auswechselkassette (9) angeordneten Schleifband bzw. den Fräsern über lösbare Kupplungen (5, 15 a) verbindbar ist.

3. Vorrichtung nach den Ansprüchen 1 und/oder 2,
**dadurch gekennzeichnet,**
daß das Traggerüst (1) aus einem vorzugsweise ständerförmigen Grundrahmen und einem, die Kupplungselemente (5, 15 a) und ggfs. Antriebsübertragungsgetriebe (4, 6, 7, 8) aufnehmenden, mit dem Traggestell heb-, senk- und ggfs. verschiebbar verbundenen Zwischenträger (3) besteht.

4. Vorrichtung nach Anspruch 3,
**dadurch gekennzeichnet,**
daß das Traggerüst die Form eines Portalrahmens aufweist und der Zwischenträger, ausbalanciert an diesem hängend, anstellbar, vertikal geführt und horizontal verschieb- und festlegbar ausgebildet ist.

5. Vorrichtung nach einem oder mehreren der Ansprüche 1 bis 3 für die Bearbeitung von Flächen, die breiter sind als die Arbeitsbreite des Schleifbandes oder der Fräser,
**dadurch gekennzeichnet,**
mehrere versetzt zueinander und in Richtung der Transportbahn des zu bearbeitenden Materials hintereinander angeordneten Traggerüste bzw. Zwischenträger.

6. Vorrichtung nach Anspruch 4,
**gekennzeichnet durch**
eine Mehrzahl von in dem Traggerüst in Form eines Profilrahmens nebeneinander hängend angeordnete Zwischenträger und diesen zugeordnete Auswechselkassetten.

7. Vorrichtung nach einem oder mehreren der Ansprüche 3 und 5,
**dadurch gekennzeichnet,**
daß die Zwischenträger (3) durch an diesen angelenkte Parallelschwenkarme (2) miteinander verbunden sind.

8. Vorrichtung nach den Ansprüchen 3, 5 und 7,
**gekennzeichnet durch**
oberhalb des Zwischenträgers (3) und der parallelen Schwenkarme (2) angeordnete, mit diesen und einem Kragarm (1b) des Traggerüstes (1) verbundenes, die Anstellbewegungen des Zwischenträgers (3) mit der Auswechselkassette (9) bewirkende Kolben-Zylinder-Aggregate (18).

9. Vorrichtung nach einem oder mehreren der Ansprüche 3 bis 8,
**gekennzeichnet durch**
an der Auswechselkassette (9) bzw. an dem Zwischenträger (3) in entsprechende Halteausnehmungen einsteck- und verriegelbare Zentrier- und Befestigungsbolzen (16, 17).
